# EUROPEAN PATENT APPLICATION

(11) **EP 2 693 379 A1**
(43) Date of publication of application: **05.02.2014**
(21) Application number: 12764199.1
(22) Date of filing: 23.03.2012
(51) Int. Cl.: G06Q 10/06, G06Q 40/06

(54) **RISK-MANAGEMENT DEVICE**

(30) Priority: 29.03.2011 JP 2011072747
(71) Applicant: NEC Corporation, Tokyo 108-8001 (JP)
(72) Inventor: MORINAGA, Satoshi, Tokyo 108-8001 (JP); IMAMURA, Satoru, Tokyo 105-8574 (JP)
(74) Representative: Robson, Aidan John
(86) International application number: PCT/JP2012/002006
(87) International publication number: WO 2012/132355

(57) **Abstract**

A risk management device includes: a memory for storing a plurality of verification units each composed of one or more scenario data each including a predicted value of loss occurrence frequency, a verification range that is a collection of the plurality of verification units, and actual loss occurrence numbers corresponding to the scenario data; and a processor connected to the memory. The processor is programmed to determine by using a goodness-of-fit test on a Poisson distribution whether the total value of the loss occurrence numbers corresponding to the scenario data included in the verification range follows a Poisson distribution that the total value of predicted values of loss occurrence frequency in the scenario data included in the verification range is defined as a mean.

## Description

### TECHNICAL FIELD

The present invention relates to a risk management device, more specifically, relates to a risk management device having a function of statistically verifying loss occurrence frequency in scenario data which is an input to a risk weighing device.

### BACKGROUND ART

In general, company business may face various kinds of operational risk (simply referred to as "risk" hereinafter) such as an earthquake, system trouble, a clerical mistake and fraud. Therefore, it is required to weigh the amount of risk by using a risk weighing device and take measures against the risk.

A risk weighing device inputs therein fragmental information on an unknown risk profile in a company, and weighs a feature value (e.g., 99.9% value at risk (VaR)) of the risk profile in the company from the input data. The data inputted into the risk weighing device generally includes internal loss data and scenario data. Internal loss data is data on a loss event having actually occurred in the company. Internal loss data shows the contents of events and the loss amounts brought by the respective events. However, it is difficult to obtain a necessary and sufficient number of internal loss data with respect to all event contents. Thus, with respect to the content of an event which has rarely occurred and the content of an event which has not occurred yet, the values of the occurrence frequency and loss amount thereof are calculated as scenario data and utilized to weigh a risk amount.

A general risk weighing device weighs VaR by using a method called loss distribution approach (e.g., refer to Patent Document 1 and Non-Patent Document 1). To be specific, firstly, the risk weighing device generates a loss frequency distribution from the number of internal loss data, and so on, and generates a loss scale distribution from internal loss data, scenario data and so on. Next, by Monte Carlo simulation, the risk weighing device repeats, ten-thousand or hundred-thousand times, a process of taking out the loss amounts of the number of losses caused by using the abovementioned loss frequency distribution from the abovementioned loss scale distribution, totaling the loss amounts and calculating a loss mount per holding period, thereby generating the distribution of the loss amounts. Then, the risk weighing device calculates VaR in a predetermined confidence interval from this generated loss amount distribution.

The loss occurrence frequency in scenario data mentioned above is predicted by a method as shown below (e.g., refer to Non-Patent Document 1).

First, based on the number of occurrences of loss per year in business in which the loss has actually occurred and the scores regarding risk assessment and internal control situation assessment that have been executed on the business, a mean frequency evaluation table is generated. In the mean frequency evaluation table, the number of occurrences per year is described on a matrix formed by a combination of risk assessment and internal control situation assessment. Next, operational risk inherent in each business process or the like is recognized as a scenario. Then, the risk assessment and internal control situation assessment as described above are executed on each scenario, the mean frequency assessment table is subtracted from the score of the risk assessment and the score of the internal control situation assessment, and the frequency of each scenario (the number of occurrences of a scenario event in one year) is estimated. Thus, it is possible to estimate even the occurrence frequency of a scenario such that no loss experience exists in the past.

Patent Document 1: Japanese Patent Publication No. 4241083

Non-Patent Document 1: Kobayashi, Shimizu, Nishiguchi, and Morinaga, "Operational Risk Management," Kinzai Institute for Financial Affairs, Inc., issued on April 24, 2009, pp. 107-144, 181-189

An error of loss occurrence frequency in scenario data is a major cause of decrease of the accuracy of weighing in a risk weighing device. Therefore, even if loss occurrence frequency in scenario data is predicted by any method, it is important to perform ex-post verification of the validity of a predicted value by using a loss case having actually occurred. However, because a scenario usually deals with an event which has rarely occurred or an event which has never occurred, the number of loss cases in which such events have actually occurred is small. Due to such a condition, an effective method has not been established yet for performing ex-post verification of the validity of loss occurrence frequency in scenario data from a different viewpoint from the prediction method.

### SUMMARY

An object of the present invention is to provide a risk management device solving the aforementioned problem, namely, a problem that there is no effective method for performing ex-post verification of the validity of loss occurrence frequency in scenario data.

A risk management device according to an exemplary embodiment of the present invention includes:
a memory for storing a plurality of verification units each composed of one or more scenario data each including a predicted value of loss occurrence frequency, a verification range that is a collection of the plurality of verification units, and actual loss occurrence numbers corresponding to the scenario data; and
a processor connected to the memory,
wherein the processor is programmed to determine by using a goodness-of-fit test on a Poisson distribution whether a total value of the loss occurrence numbers corresponding to the scenario data included in the verification range follows a Poisson distribution that a total value of predicted values of loss occurrence frequency in the scenario data included in the verification range is defined as a mean.

With the configurations as described above, the present invention enables verification of the validity of loss occurrence frequency in scenario data by using actual loss cases.

### BRIEF DESCRIPTION OF DRAWINGS

Fig. 1 is a block diagram of a risk management device according to a first exemplary embodiment of the present invention;
Fig. 2 shows an example of the configuration of a verification range, a loss occurrence number and a first test condition in the first exemplary embodiment of the present invention;
Fig. 3 is a flowchart showing an example of processing in the first exemplary embodiment of the present invention;
Fig. 4 is a flowchart showing an example of processing in verification of conservativeness in the first exemplary embodiment of the present invention;
Fig. 5 is a block diagram of a risk management device according to a second exemplary embodiment of the present invention;
Fig. 6 shows an example of the configuration of a second test condition in the second exemplary embodiment of the present invention;
Fig. 7 is a flowchart showing an example of processing in the second exemplary embodiment of the present invention;
Fig. 8 is a flowchart showing an example of processing in verification of unbiasedness in the second exemplary embodiment of the present invention;
Fig. 9 is a block diagram of a risk management device according to a third exemplary embodiment of the present invention;
Fig. 10 is a flowchart showing an example of processing in the third exemplary embodiment of the present invention;
Fig. 11 is a flowchart showing an example of processing in correction in the third exemplary embodiment of the present invention;
Fig. 12 is a block diagram of a risk management device according to a fourth exemplary embodiment of the present invention;
Fig. 13 is an example of the configuration of a scenario data group in the fourth exemplary embodiment of the present invention;
Fig. 14 shows an example of a verification range and a verification unit in the fourth exemplary embodiment of the present invention; and
Fig. 15 is a flowchart showing an example of processing in the fourth exemplary embodiment of the present invention.

### EXEMPLARY EMBODIMENTS

Next, exemplary embodiments of the present invention will be described in detail with reference to the drawings.

### [First Exemplary Embodiment]

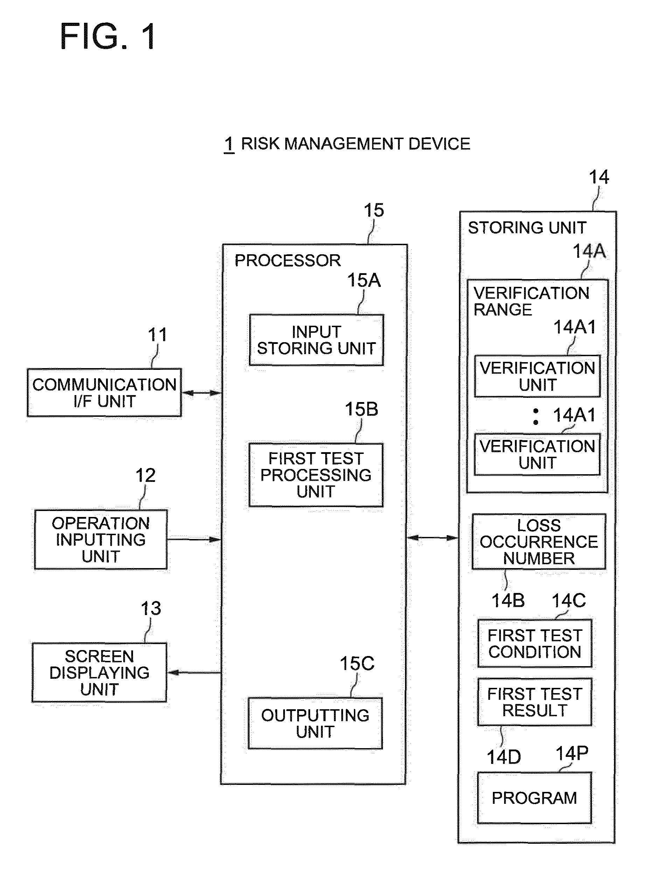

With reference to Fig. 1, a risk management device 1 according to a first exemplary embodiment of the present invention has a function of verifying by using actual loss cases whether loss occurrence frequency in scenario data included in a plurality of verification units is valid for the whole verification units. Hereinafter, such verification will be referred to as verification of conservativeness.

This risk management device 1 has, as major function units, a communication interface unit (referred to as a communication I/F unit hereinafter) 11, an operation inputting unit 12, a screen displaying unit 13, a storing unit 14, and a processor 15.

The communication I/F unit 11 is formed by a dedicated data communication circuit, and has a function of performing data communication with various kinds of devices (not shown in the drawings) connected via a communication line (not shown in the drawing).

The operation inputting unit 12 is formed by an operation input device such as a keyboard and a mouse, and has a function of detecting an operation by an operator and outputting to the processor 15.

The screen displaying unit 13 is formed by a screen display device such as an LCD and a PDP, and has a function of displaying various kinds of information such as an operation menu and a verification result on a screen in accordance with instructions from the processor 15.

The storing unit 14 is formed by a storage device such as a hard disk and a semiconductor memory, and has a function of storing processing information necessary for various kinds of processing by the processor 15 and a program 14P. The program 14P, which is a program loaded into the processor 15 and executed to realize various kinds of processing units, is previously loaded from an external device (not shown) or a computer-readable storage medium (not shown) via a data input/output function such as the communication I/F 11, and is stored into the storing unit 14. Major processing information stored by the storing unit 14 includes a plurality of verification units 14A1, a verification range 14A that is a collection thereof, a first test condition 14C, and a first test result 14D.

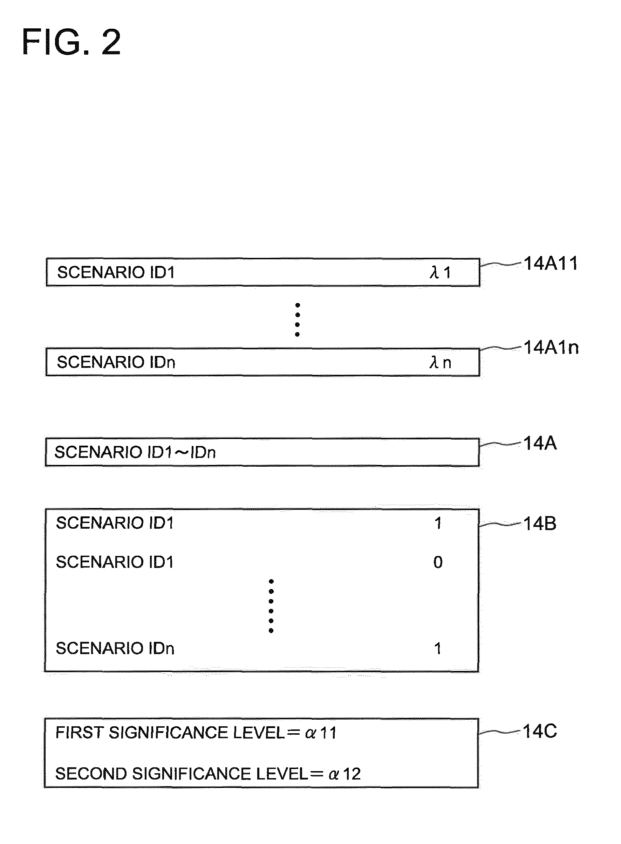

The verification unit 14A1 is composed of one or more scenario data. Each scenario data is composed of an identifier (an ID) for uniquely identifying the scenario data and a predicted value of loss occurrence frequency. A predicted value of a loss occurrence amount of is not used in verification of the frequency of scenario data, and therefore, may be excluded from scenario data. Fig. 2 shows an example of the configuration of the verification unit 14A1. The verification unit 14A1 of this example is composed of one scenario data. Scenario data 14A1i (i = 1 to n) has a scenario IDi and a predicted value λi of loss occurrence frequency. Assuming that a holding period is one year, the predicted value λi of loss occurrence frequency shows the number of occurrences of loss occurring per year.

The verification range 14A is a collection of the verification units 14A1. Fig. 2 shows an example of the configuration of the verification range 14A. The verification range of this example shows that the set of scenario data having scenario ID1 to IDn is defined as a verification range.

The loss occurrence number 14B is data showing the number of occurrences of actual loss corresponding to scenario data. The loss occurrence number 14B is a collection of pairs each including an identifier for specifying corresponding scenario data and a loss occurrence number per holding period. Fig. 2 shows an example of the configuration of the loss occurrence number 14B. Data on the first line of the loss occurrence number of this example shows that a loss occurrence number per holding period of a scenario corresponding to a scenario ID1 is one.

The first test result 14D is data showing the result of a first test process executed by the processor 15. The first test result 14D is one of three results, namely, "conservative," "valid" or "nonconservative." "Conservative" refers to that loss occurrence frequency in scenario data included in a plurality of verification units is, for the whole verification units, more than estimated from an actual occurrence number. On the contrary to "conservative," "nonconservative" refers to that loss occurrence frequency in scenario data included in a plurality of verification units is, for the whole verification units, less than estimated from an actual occurrence number. "Valid" is neither "conservative" nor "nonconservative," and refers to that loss occurrence frequency in scenario data included in a plurality of verification units is valid for the whole verification units.

The first test condition 14C shows a condition for the first test process executed by the processor 15. Fig. 2 shows an example of the configuration of the first test condition 14C. The first test condition 14C shows that first and second significance levels used for the first test process are α11 and α12. Herein, the first significance level α11 is used for determination of conservativeness, and the second significance level α12 is used for determination of nonconservativeness.

The processor 15 has a microprocessor such as a CPU and a peripheral circuit thereof, and has a function of loading the program 14P from the storing unit 14 and executing to make the hardware and the program 14P work in cooperation and realize various kinds of processing units. Major processing units realized by the processor 15 are an input storing unit 15A, a first test processing unit 15B, and an outputting unit 15C.

The input storing unit 15A has a function of inputting therein the verification units 14A1, the verification range 14A, the loss occurrence number 14B and the first test condition 14C from the communication I/F unit 11 or the operation inputting unit 12, and storing into the storing unit 14.

The first test processing unit 15B has a function of determining by using a goodness-of-fit test on a Poisson distribution whether the total value of the loss occurrence numbers 14B corresponding to scenario data included in the respective verification units 14A1 of the verification range 14A follows a Poisson distribution that the total value of predicted values of loss occurrence frequency in the scenario data included in the respective verification units 14A1 of the verification range 14A is defined as the mean. Moreover, the first test processing unit 15B has a function of storing the result of the test as the first test result 14D into the storing unit 14.

The outputting unit 15C has a function of loading the test result 14D by the first test processing unit 15B from the storing unit 14, and outputting as a conservativeness verification result for the whole verification units to the screen displaying unit 13, or to the outside through the communication I/F unit 11.

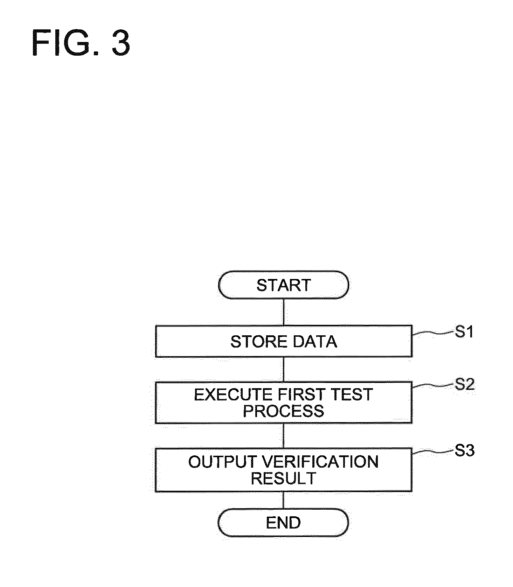

Next, with reference to Fig. 3, the operation of the risk management device 1 according to this exemplary embodiment will be described.

First, the input storing unit 15A inputs therein the plurality of verification units 14A1, the verification range 14A that is a collection of the verification units 14A1, the actual loss occurrence number 14B corresponding to scenario data, and the first test condition 14C from the communication I/F unit 11 or the operation inputting unit 12, and stores into the storing unit 14 (step S1).

Next, the first test processing unit 15B loads the plurality of verification units 14A1, the verification range 14A, the loss occurrence number 14B and the first test condition 14C from the storing unit 14, determines by using a goodness-of-fit test on a Poisson distribution whether the total value of loss occurrence numbers corresponding to scenario data included in the verification range 14A follows a Poisson distribution that the total value of predicted values of loss occurrence frequency in the scenario data included in the verification range 14A is defined as the mean, and stores the result into the storing unit 14 (step S2).

Next, the outputting unit 15C loads the test result 14D by the first test processing unit 15B from the storing unit 14, and outputs as a verification result to the screen displaying unit 13, or to the outside through the communication I/F unit 11 (step S3).

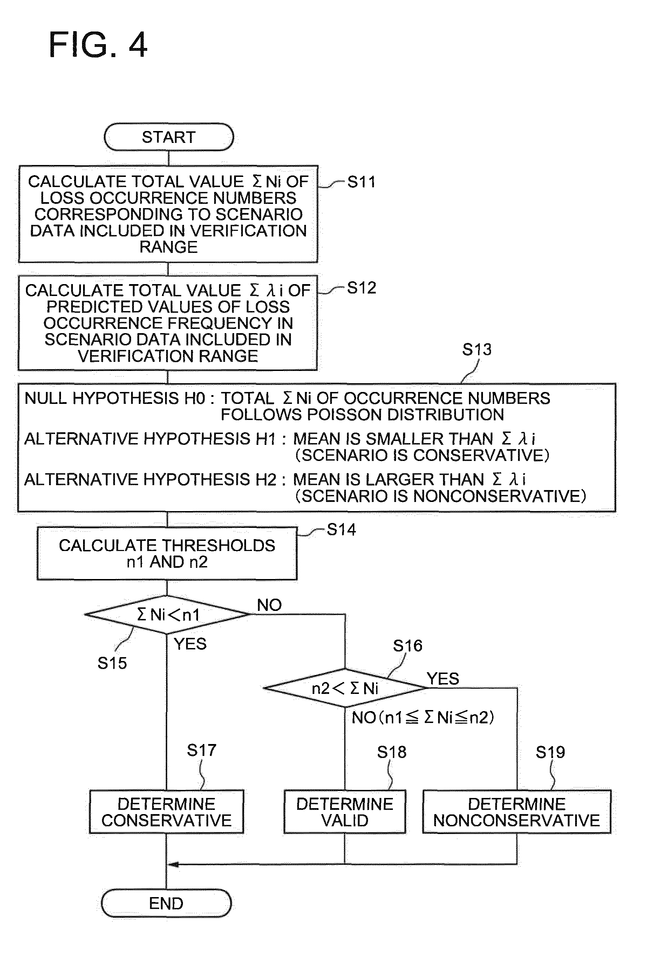

Fig. 4 is a flowchart showing an example of processing at step S2 of Fig. 3. Below, an example of processing by the first test processing unit 15B will be described with reference to Fig. 4.

At the beginning, the first test processing unit 15B calculates a total value ΣNi of loss occurrence numbers corresponding to scenario data included in the verification range 14A (step S11). Next, the first test processing unit 15B calculates a total value Σλi of predicted values of loss occurrence frequency in the scenario data included in the verification range 14A (step S 12).

Next, the first test processing unit 15B sets a null hypothesis H0 and alternative hypotheses H1 and H2 as described below (step S13). The null hypothesis H0 is set as "the occurrence number total ΣNi follows a Poisson distribution with the mean Σλi." The alternative hypothesis H1 is set as "the mean is smaller than Σλi (a scenario is conservative). The alternative hypothesis H2 is set as "the mean is larger than Σλi (a scenario is nonconservative).

Next, the first test processing unit 15B assumed that the null hypothesis H0 is correct, and calculates thresholds n1 and n2 to be compared with the total value ΣNi of loss occurrence numbers from the Poisson distribution with the mean Σλi (step S14). Herein, the threshold n1 is a value such that a probability that the Poisson distribution with the mean Σλi has a value equal to or less than the n1 is more than the significance level α11 and a probability that the Poisson distribution has a value equal to or less than (n1-1) is equal to or less than the significance level α11. Moreover, the threshold n2 is a value such that a probability that the Poisson distribution with the mean Σλi has a value equal to or more than the n2 is more than the significance level α12 and a probability that the Poisson distribution has a value equal to or more than (n2+1) is equal to or less than the significance level α12.

Next, the first test processing unit 15B compares the total value ΣNi of loss occurrence numbers with the thresholds Σn1 and n2 (steps S15 and S 16), generates a test result depending on the comparison results, and stores into the storing unit 14 (steps S 17 to S19). That is to say, the first test processing unit 15B determines "conservative" when ΣNi<n1, "valid" when n1≤ΣNi≤n2, and "nonconservative" when n2<ΣNi.

Thus, according to this exemplary embodiment, it is possible to verify the validity of loss occurrence frequency in scenario data by using actual loss cases.

Further, according to this exemplary embodiment, because the validity of loss occurrence frequency is verified for the whole scenario group that is a collection of a plurality of scenario data, it is possible to perform accurate verification even when the frequency is too low to perform verification of conservativeness for a single scenario. This will be described more.

As verification of conservativeness for each scenario, hypothesis testing will be thought by forming a null hypothesis that a loss occurrence number Ni corresponding to a scenario i follows a Poisson distribution with the mean λi and an alternative hypothesis that the null hypothesis is not established. In such verification of conservativeness for each scenario, for example, assuming a one-tailed test with a significance level 1%, even when an actual loss occurs once as a result of observation for one year of a scenario with frequency of 1/50 (once a fifty years), the frequency of the scenario is determined valid. Therefore, even when an actual loss occurs once with respect to each of 100 "scenarios with frequency of 1/50," the frequency is determined valid in verification of validity for each scenario. However, it is hard to think that 100 rare events occurring with probability of 1/50 occur simultaneously, it is thought that the frequency should be determined invalid actually. According to this exemplary embodiment, it is possible to correctly verify even in such a case.

Further, in verification of conservativeness for each scenario, it is determined invalid when an actual loss occurs once with respect to a "scenario with frequency of 1/200," but it is not appropriate to determine invalid when an actual loss occurs with respect to one scenario among 100 "scenarios with frequency of 1/200." According to this exemplary embodiment, it is possible to accurately verify even in such a case.

### [Second Exemplary Embodiment]

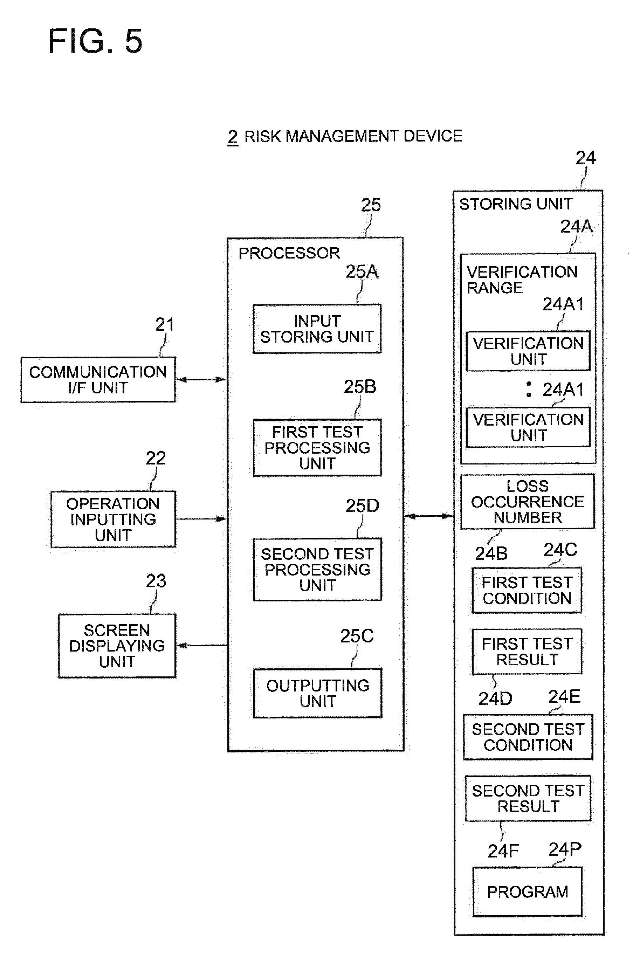

With reference to Fig. 5, a risk management device 2 according to a second exemplary embodiment of the present invention has, in addition to the conservativeness verification function possessed by the risk management device 1 according to the first exemplary embodiment, a function of verifying by using actual loss cases whether there is a bias in conservativeness among verification units in a verification range. Hereinafter, the latter verification will be referred to as verification of unbiasedness.

The risk management device 2 has, as major function units, a communication I/F unit 21, an operation inputting unit 22, a screen displaying unit 23, a storing unit 24, and a processor 25.

The communication I/F unit 21, the operation inputting unit 22 and the screen displaying unit 23 have the same functions as the communication I/F unit 11, the operation inputting unit 12 and the screen displaying unit 13 shown in Fig. 1 in the first exemplary embodiment.

The storing unit 24 is formed by a storage device such as a hard disk and a semiconductor memory, and has a function of storing processing information necessary for various kinds of processing by the processor 25 and a program 24P. The program 24P, which is a program loaded into the processor 25 and executed to realize various kinds of processing units, is previously loaded from an external device (not shown) or a computer-readable storage medium (not shown) via a data input/output function such as the communication I/F 21, and is stored into the storing unit 24. Major processing information stored by the storing unit 24 includes a plurality of verification units 24A1, a verification range 24A that is a collection thereof, a loss occurrence number 24B, a first test condition 24C, a first test result 24D, a second test condition 24E, and a second test result 24F.

The plurality of verification units 24A1, the verification range 24A, the loss occurrence number 24B, the first test condition 24C and the first test result 24D are the same as the plurality of verification units 14A1, the verification range 14A, the loss occurrence number 14B, the first test condition 14C and the first test result 14D in the first exemplary embodiment.

The second test result 24F is data showing the result of a second test process executed by the processor 25. The second test result 24F is either "unbiased" or "biased."

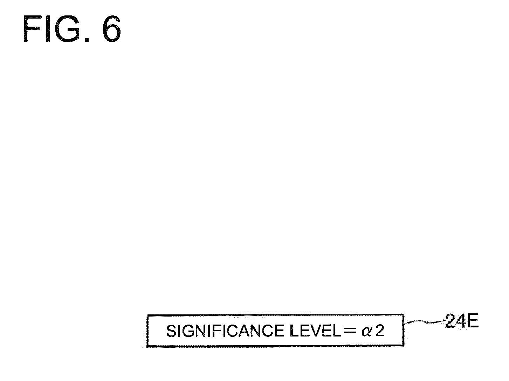

The second test condition 24E shows a condition for the second test process executed by the processor 25. Fig. 6 shows an example of the configuration of the second test condition 24E. The second test condition 24E of this example shows that a significance level used for the second test process is α2.

The processor 25 has a microprocessor such as a CPU and a peripheral circuit thereof, and has a function of loading the program 24P from the storing unit 24 and executing to make the hardware and the program 24P work in cooperation and realize various kinds of processing units. Major processing units realized by the processor 25 are an input storing unit 25A, a first test processing unit 25B, an outputting unit 25C, and a second test processing unit 25D.

The input storing unit 25A has a function of inputting therein the verification units 24A1, the verification range 24A, the loss occurrence number 24B, the first test condition 24C and the second test condition 24E from the communication I/F unit 21 or the operation inputting unit 22, and storing into the storing unit 24.

The first test processing unit 25B has a function similar to that of the first test processing unit 15B of the risk management device 1 according to the first exemplary embodiment. That is to say, the first test processing unit 25B has a function of determining by using a goodness-of-fit test on a Poisson distribution whether the total value of the loss occurrence numbers 24B corresponding to scenario data included in the respective verification units 24A1 of the verification range 24A follows a Poisson distribution that the total value of predicted values of loss occurrence frequency in the scenario data included in the respective verification units 24A1 of the verification range 24A is defined as the mean, and storing the result of the test as the first test result 24D into the storing unit 24.

The second test processing unit 25D has a function of determining by using a goodness-of-fit test on a multinomial distribution whether the loss occurrence numbers 24B corresponding to scenario data for the respective verification units 24A1 follow a multinomial distribution that a total parameter is the total value of loss occurrence numbers corresponding to scenario data included in the verification range 24A and a ratio parameter is a ratio of the total value of predicted values of loss occurrence frequency in the scenario data for each of the verification units 24A1 to the total value of the predicted values of loss occurrence frequency in the scenario data included in the verification range 24A. Moreover, the second test processing unit 25D has a function of storing the result of the test as the second test result 24F into the storing unit 24.

The outputting unit 25C has a function of loading the first test result 24D and the second test result 24F from the storing unit 24, and outputting as a conservativeness verification result for the whole verification units and an unbiasedness verification result among the verification units to the screen displaying unit 23, or to the outside through the communication I/F unit 21.

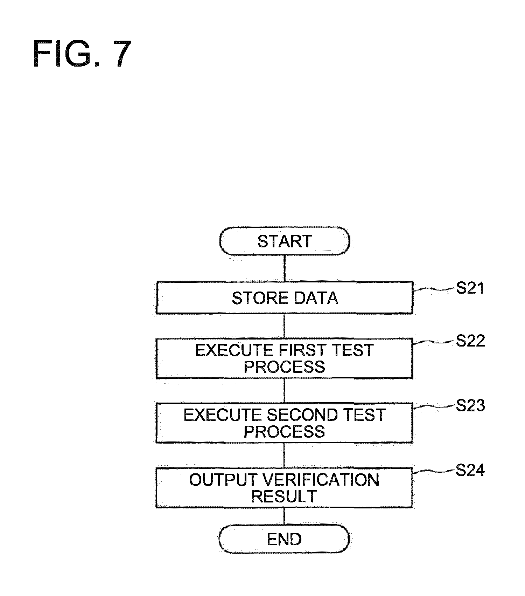

Next, with reference to Fig. 7, the operation of the risk management device 2 according to this exemplary embodiment will be described.

First, the input storing unit 25A inputs therein the plurality of verification units 24A1, the verification range 24A that is a collection of the verification units 24A1, the actual loss occurrence number 24B corresponding to scenario data, the first test condition 14C and the second test condition 24E from the communication I/F unit 21 or the operation inputting unit 22, and stores into the storing unit 24 (step S21).

Next, as well as the first test processing unit 15B in the first exemplary embodiment, the first test processing unit 25B determines by using a goodness-of-fit test on a Poisson distribution whether the total value of loss occurrence numbers corresponding to scenario data included in the verification range 24A follows a Poisson distribution that the total value of predicted values of loss occurrence frequency in the scenario data included in the verification range 24A is defined as the mean, and stores the result into the storing unit 24 (step S22).

Next, the second test processing unit 25D loads the plurality of verification units 24A1, the verification range 24A, the loss occurrence number 24B and the second test condition 24E from the storing unit 24, determines by using a goodness-of-fit test on a multinomial distribution whether the loss occurrence numbers 24B corresponding to scenario data for the respective verification units 24A1 follow a multinomial distribution that a total parameter is the total value of the loss occurrence numbers corresponding to the scenario data included in the verification range 24A and a ratio parameter is a ratio of the total value of the predicted values of loss occurrence frequency in the scenario data for each of the verification units 24A1 to the total value of the predicted values of loss occurrence frequency in the scenario data included in the verification range 24A, and stores the result into the storing unit 24 (step S23).

Next, the outputting unit 25C loads the first test result 24C and the second test result 24F from the storing unit 24, and outputs as a conservativeness verification result for the whole verification units and an unbiasedness verification result among the verification units to the screen displaying unit 23, or to the outside through the communication I/F unit 21 (step S24).

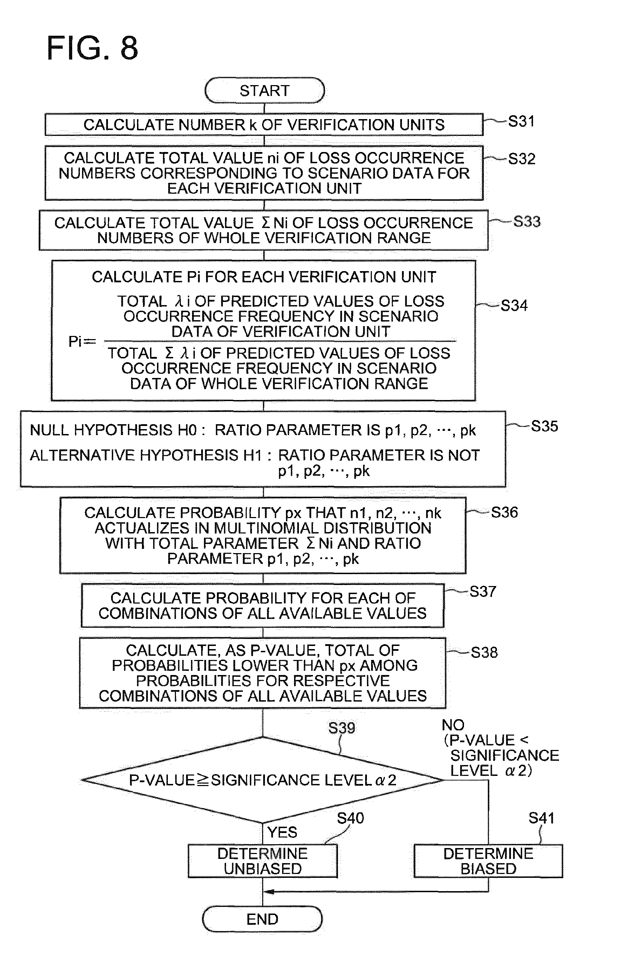

Fig. 8 is a flowchart showing an example of processing at step S23 of Fig. 7. Below, with reference to Fig. 8, an example of processing by the second test processing unit 25D will be described.

At the beginning, the second test processing unit 25D calculates the number k of the verification units 24A1 (step S31). Next, the second test processing unit 25D calculates, for each verification unit, the total value n1, n2, ..., nk of loss occurrence numbers corresponding to scenario data included in the verification unit (step S32). Next, the second test processing unit 25D calculates the total value ΣNi of loss occurrence numbers corresponding to scenario data included in the verification range 24A (step S33).

Next, the second test processing unit 25D calculates, for each verification unit 24A1, a predicted value p1, p2, ..., pk of a ratio parameter (step S34). A ratio parameter pi of a certain verification unit 24A1 is calculated as a value obtained by dividing the total λi of predicted values of loss occurrence frequency in scenario data included in the verification unit by the total value Σλi of predicted values of loss occurrence frequency in scenario data included in the verification range 24A.

Next, the second test processing unit 25D forms a null hypothesis H0 and an alternative hypothesis H1 as shown below (step S35). The null hypothesis H0 is set as "a ratio parameter is p1, p2, ..., pk." The alternative hypothesis H1 is set as "a ratio parameter is not p1, p2, ..., pk."

Next, the second test processing unit 25D assumes that the null hypothesis H0 is correct, and calculates a probability px that an actual value n1, n2, ..., nk of a loss occurrence number actualizes in a multinomial distribution of a ratio parameter p1, p2, ..., pk (step S36).

Next, the second test processing unit 25D calculates a probability for each of combinations of all available values in a multinomial distribution with a total parameter ΣNi and a ratio parameter p1, p2, ..., pk, namely, for each of combinations of k non-negative integers whose total is ΣNi (step S37). Next, the second test processing unit 25D calculates, as a p-value, the total of the probabilities lower than a probability px that the actual value n1, n2, ..., nk actualizes among the calculated probabilities (step S38).

Next, the second test processing unit 25D compares the calculated p-value with the significance level α2 (step S39). Then, the second test processing unit 25D generates a test result depending on the comparison result, and stores into the storing unit 24 (steps S40 and S41). That is to say, the second test processing unit 25D determines "unbiased" when p-value ≥ significance level α2, and determines "biased" when p-value < significance level α2.

Thus, according to this exemplary embodiment, it is possible to more accurately verify the validity of loss occurrence frequency in scenario data than in the first exemplary embodiment, by using actual loss cases. This is because the validity of loss occurrence frequency is verified for the whole scenario group that is a collection of a plurality of scenario data and it is verified by using actual loss cases whether there is a bias in conservativeness among verification units. This will be described more.

As mentioned above, by verifying the validity of loss occurrence frequency for the whole scenario group that is a collection of scenario data of all verification units, it becomes possible to accurately verify even when scenario frequency is too low to perform verification of conservativeness for a single verification unit. However, when scenario data of all verification units are collected into one, scenario frequency of each verification unit is concealed. Therefore, when the total of scenario frequency of the whole scenario group is constant, the result of verification of conservativeness becomes constant. By performing verification of unbiasedness, it is possible to verify a bias in conservativeness among verification units, which cannot be verified in verification of conservativeness.

### [Third Exemplary Embodiment]

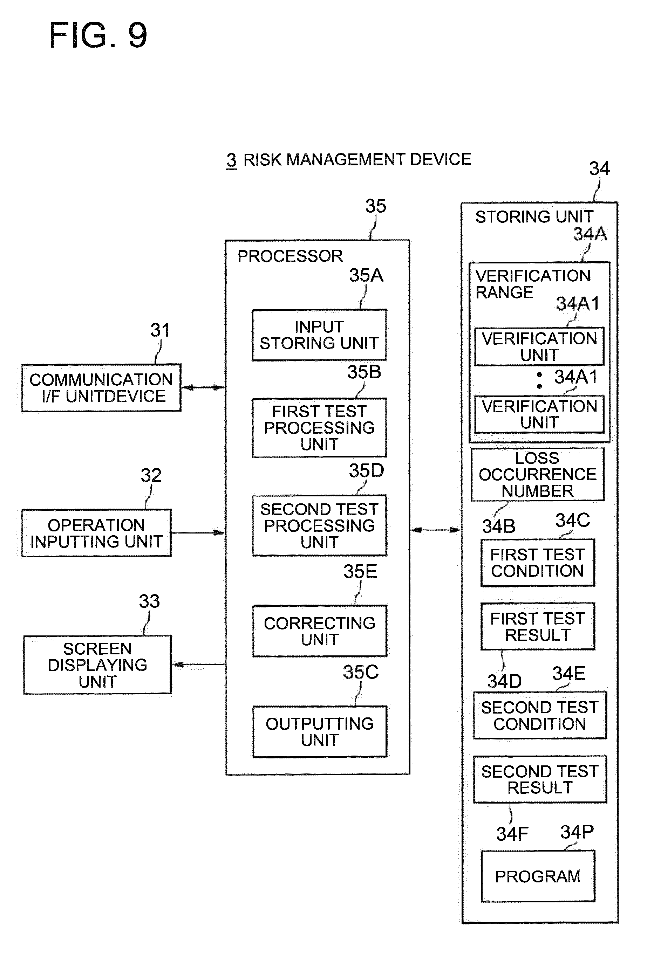

With reference to Fig. 9, a risk management device 3 according to a third exemplary embodiment of the present invention has a function of correcting loss occurrence frequency in scenario data based on the result of verification, in addition to the conservativeness verification function and the unbiasedness verification function possessed by the risk management device 2 according to the second exemplary embodiment.

The risk management device 3 has, as major function units, a communication I/F unit 31, an operation inputting unit 32, a screen displaying unit 33, a storing unit 34, and a processor 35.

The communication I/F unit 31, the operation inputting unit 32 and the screen displaying unit 33 have the same functions as the communication I/F unit 21, the operation inputting unit 22 and the screen displaying unit 23 shown in Fig. 5 in the second exemplary embodiment.

The storing unit 34 is formed by a storage device such as a hard disk and a semiconductor memory, and has a function of storing processing information necessary for various kinds of processing by the processor 35 and a program 34P. The program 34P, which is a program loaded into the processor 35 and executed to realize various kinds of processing units, is previously loaded from an external device (not shown) or a computer-readable storage medium (not shown) via a data input/output function such as the communication I/F unit 31, and is stored into the storing unit 34. Major processing information stored by the storing unit 34 includes a plurality of verification units 34A1, a verification range 34A that is a collection thereof, a loss occurrence number 34B, a first test condition 34C, a first test result 34D, a second test condition 34E, and a second test result 34F.

The plurality of verification units 34A1, the verification range 34A that is a collection thereof, the loss occurrence number 34B, the first test condition 34C, the first test result 34D, the second test condition 34E and the second test result 34F are the same as the plurality of verification units 24A1, the verification range 24A, the loss occurrence number 24B, the first test condition 24C, the first test result 24D, the second test condition 24E and the second test result 24F in the second exemplary embodiment.

The processor 35 has a microprocessor such as a CPU and a peripheral circuit thereof, and has a function of loading the program 34P from the storing unit 34 and executing to make the hardware and the program 34P work in cooperation and realize various kinds of processing units. Major processing units realized by the processor 35 are an input storing unit 35A, a first test processing unit 35B, an outputting unit 35C, a second test processing unit 35D, and a correcting unit 35E.

The input storing unit 35A, the first test processing unit 35B and the second test processing unit 35D have the same functions as the input storing unit 25A, the first test processing unit 25B and the second test processing unit 25D in the second exemplary embodiment.

The correcting unit 35E has a function of loading the conservativeness verification test result 34D and the unbiasedness verification test result 34F from the storing unit 34, determining a verification unit 34A1 in which a predicted value of loss occurrence frequency is to be corrected based on the two test results, and correcting the predicted value of loss occurrence frequency in scenario data of the determined verification unit 34A1. Moreover, the correcting unit 35E has a function of storing the corrected scenario data into the storing unit 34. The correcting unit 35E may write the corrected scenario data over the original scenario data, or may store the corrected scenario data into the storing unit 34 separately from the original scenario data. Moreover, the correcting unit 35E has a function of making the first test processing unit 35B restart the processing in the case of having corrected at least one scenario data.

The outputting unit 35C has a function of loading the first test result 34D, the second test result 34F and the corrected scenario data from the storing unit 34, and outputting as a conservativeness verification result of the whole verification units, an unbiasedness verification result among the verification units and the content of correction to the screen displaying unit 33, or to the outside through the communication I/F unit 31.

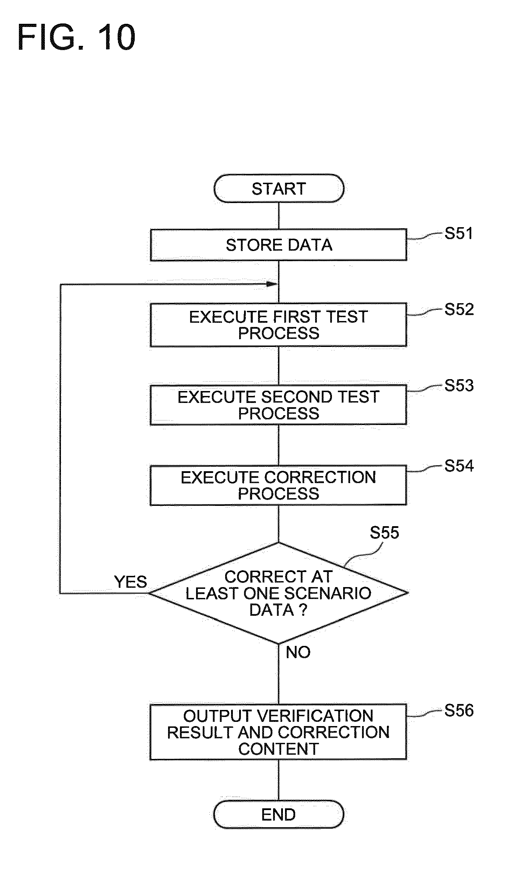

Next, with reference to Fig. 10, the operation of the risk management device 3 according to this exemplary embodiment will be described.

First, as well as the input storing unit 25A in the second exemplary embodiment, the input storing unit 35A inputs therein the plurality of verification units 34A1, the verification range 34A that is a collection of the verification units 34A1, the actual loss occurrence number 34B corresponding to scenario data, the first test condition 34C and the second test condition 34E from the communication I/F unit 31 or the operation inputting unit 32, and stores into the storing unit 34 (step S51).

Next, as well as the first test processing unit 25B in the second exemplary embodiment, the first test processing unit 35B determines by using a goodness-of-fit test on a Poisson distribution whether the total value of loss occurrence numbers corresponding to scenario data included in the verification range 34A follows a Poisson distribution that the total value of predicted values of loss occurrence frequency in the scenario data included in the verification range 34A is defined as the mean, and stores the result into the storing unit 34 (step S52).

Next, as well as the second test processing unit 25D in the second exemplary embodiment, the second test processing unit 35D determines by using a goodness-of-fit test on a multinomial distribution whether the loss occurrence numbers 34B corresponding to scenario data for the respective verification units 34A1 follow a multinomial distribution that a total parameter is the total value of the loss occurrence numbers 34B corresponding to the scenario data included in the verification range 34A and a ratio parameter is a ratio of the total value of the predicted values of loss occurrence frequency in the scenario data for each of the verification units 34A1 to the total value of the predicted values of loss occurrence frequency in the scenario data included in the verification range 34A, and stores the result into the storing unit 34 (step S53).

Next, the correcting unit 35E determines a verification unit 34A1 in which a predicted value of loss occurrence frequency is to be corrected based on the conservativeness verification test result 34D and the unbiasedness verification test result 34F, corrects the predicted value of loss occurrence frequency in scenario data in the determined verification unit 34A1, and stores the corrected scenario data into the storing unit 34 (step S54).

Next, the correcting unit 35E determines whether it has corrected at least one scenario data (step S55) and, in the case of having corrected, returns control to the first test processing unit 35B. Consequently, after the verification of conservativeness and verification of unbiasedness as mentioned above are executed again by using the corrected scenario data, the correction process by the correcting unit 35E is executed. This process is repeated until correction is executed on all scenario data to be corrected. On the other hand, in the case of having not corrected scenario data, the correcting unit 35E passes control to the outputting unit 35C.

The outputting unit 35C loads the first test result 34C, the second test result 34F and the corrected scenario data from the storing unit 34, and outputs as a conservativeness verification result for the whole verification units, an unbiasedness verification result among the verification units and the content of correction to the screen displaying unit 33, or to the outside via the communication I/F unit 31 (step S56).

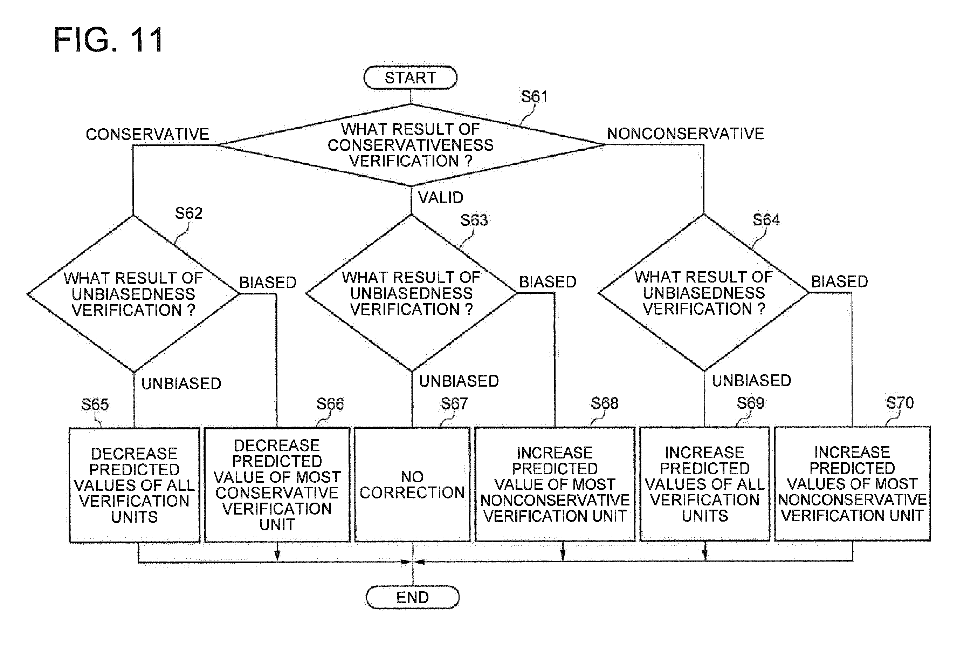

Fig. 11 is a flowchart showing an example of the processing at step S54 in Fig. 10. Below, with reference to Fig. 11, an example of the processing at step S54 executed by the correcting unit 35E will be described.

The correcting unit 35E determines whether the result 34D of verification of conservativeness is "conservative," "valid" or "non-conservative" and also determines whether the result 34F of verification of unbiasedness is "unbiased" or "biased" (steps S61 to S64). Then, the correcting unit 35E classifies into six cases shown below in accordance with the determination results, and executes a correction process corresponding to each of the cases (steps S65 to S70).

### (1) Case 1: conservative and unbiased

In this case, the correcting unit 35E performs correction by decreasing predicted values of loss occurrence frequency in scenario data included in all of the verification units 34A1 (step S65).

### (2) Case 2: conservative and biased

In this case, the correcting unit 35E performs correction by decreasing predicted values of loss occurrence frequency in scenario data included in the most conservative verification unit 34A1 among all of the verification units (step S66).

### (3) Case 3: valid in conservativeness and unbiased

In this case, the correcting unit 35E determines that there is no need to correct (step S67).

### (4) Case 4: valid in conservativeness and biased

In this case, the correcting unit 35E performs correction by increasing predicted values of loss occurrence frequency in scenario data included in the most nonconservative verification unit 34A1 among all of the verification units (step S68).

### (5) Case 5: nonconservative and unbiased

In this case, the correcting unit 35E performs correction by increasing predicted values of loss occurrence frequency in scenario data included in all of the verification units 34A1 (step S69).

### (6) Case 6: nonconservative and biased

In this case, as in Case 4, the correcting unit 35E performs correction by increasing predicted values of loss occurrence frequency in scenario data included in the most nonconservative verification unit 34A1 among all of the verification units (step S70).

The correcting unit 35E determines relative conservatives/nonconservativeness among verification units by calculating estimation values of conservativeness of the respective verification units and determining based on the magnitude thereof. An estimation value of conservativeness is a probability (= a value of a cumulative distribution function) that a Poisson distribution in which the total value of predicted values of loss occurrence frequency in scenario data included in a verification unit is defined as a mean parameter takes a value equal to or less than the total value of actual loss occurrence numbers corresponding to the scenario data included in the verification unit. Among verification units, a verification unit that the abovementioned probability is the lowest is the most conservative verification unit, and a verification unit that the probability is the highest is the most nonconservative verification unit.

Further, the correcting unit 35E determines the degree to increase or decrease a predicted value by correction in accordance with a previously determined rule. As the rule of correction, for example, the correcting unit 35E may use a rule such that a predicted value before correction is increased or decreased by a predetermined ratio (e.g., 30%) of the predicted value. Alternatively, the correcting unit 35E may use a rule such that correction is performed so that a value of frequency before correction in a frequency table where predicted values available as loss occurrence frequency are arranged in decreasing order is increased or decreased by 1 rank or 2 ranks.

Thus, according to this exemplary embodiment, it is possible to obtain the same effect as in the second exemplary embodiment, and it is also possible to automatically correct loss occurrence frequency in scenario data in a case that an invalid verification result is obtained in the results of verification of conservativeness and verification of unbiasedness.

### [Fourth Exemplary Embodiment]

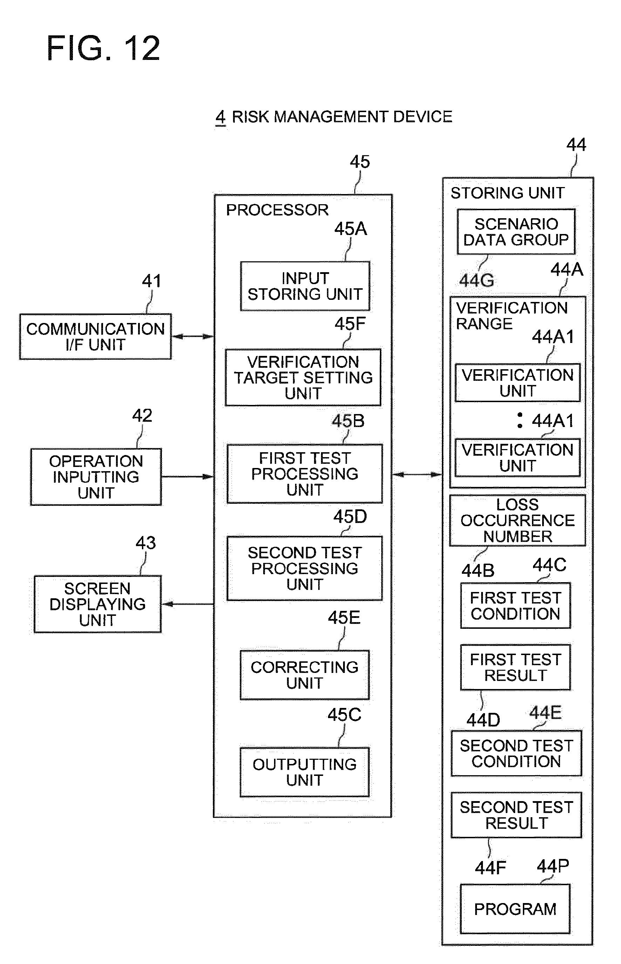

With reference to Fig. 12, a risk management device 4 according to a fourth exemplary embodiment of the present invention has a function of extracting scenario data as the target of verification from a scenario data group and setting verification units and a verification range that is a collection thereof, in addition to the conservativeness verification function, the unbiasedness verification function and the correction function possessed by the risk management device 3 according to the third exemplary embodiment.

The risk management device 4 has, as major function units, a communication I/F unit 41, an operation inputting unit 42, a screen displaying unit 43, a storing unit 44, and a processor 45.

The communication I/F unit 41, the operation inputting unit 42 and the screen displaying unit 43 have the same functions as the communication I/F unit 31, the operation inputting unit 32 and the screen displaying unit 33 shown in Fig. 9 in the third exemplary embodiment.

The storing unit 44 is formed by a storage device such as a hard disk and a semiconductor memory, and has a function of storing processing information necessary for various kinds of processing by the processor 45 and a program 44P. The program 44P, which is a program loaded into the processor 45 and executed to realize various kinds of processing units, is previously loaded from an external device (not shown) or a computer-readable storage medium (not shown) via a data input/output function such as the communication I/F unit 41, and is stored into the storing unit 44. Major processing information stored by the storing unit 44 includes a scenario data group 44G, a plurality of verification units 44A1, a verification range 44A which is a collection thereof, a loss occurrence number 44B, a first test condition 44C, a first test result 44D,a second test condition 44E, and a second test result 44F.

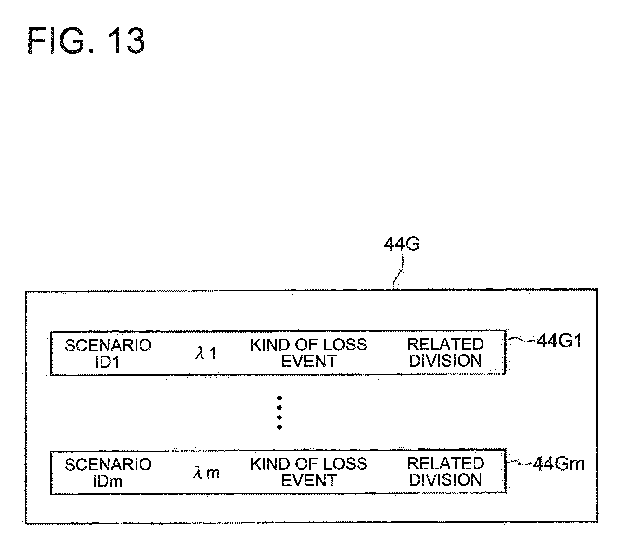

The scenario data group 44G is composed of a plurality of scenario data. Each scenario data is composed of an identifier (ID) for uniquely identifying the scenario data, a predicted value of loss occurrence frequency, the kind of a loss event, and a related division representing a division having generated the scenario, a division in which the scenario is possible, or the like. Fig. 13 shows an example of the configuration of the scenario data group 44G. The scenario data group 44G of this example is composed of m scenario data. Scenario data 44Gi (i = 1 to m) has a scenario IDi, a predicted value λi of loss occurrence frequency, the kind of a loss event, and a related division. The predicted value λi of loss occurrence frequency represents, assuming that a holding period is one year, the number of occurrences of a loss occurring per year. The kind of a loss event is, for example, system trouble, fraud, an earthquake, or the like.

The plurality of verification units 44A1, the verification range 44A that is a collection thereof, the loss occurrence number 44B, the first test condition 44C, the first test result 44D, the second test condition 44E and the second test result 44F are the same as the plurality of verification units 34A1, the verification range 34A, the loss occurrence number 34B, the first test condition 34C, the first test result 34D, the second test condition 34E and the second test result 34F in the third exemplary embodiment. However, there is a difference such that the plurality of verification units 34A1 and the verification range 34A are data given as input information, whereas the plurality of verification units 44A1 and the verification range 44A are data automatically generated from the scenario data group 44G.

The processor 45 has a microprocessor such as a CPU and a peripheral circuit thereof, and has a function of loading the program 44P from the storing unit 44 and executing to make the hardware and the program 44P work in cooperation and realize various kinds of processing units. Major processing units realized by the processor 45 are an input storing unit 45A, a first test processing unit 45B, an outputting unit 45C, a second test processing unit 45D, a correcting unit 45E, and a verification target setting unit 45F.

The input storing unit 45A has a function of inputting therein the scenario data group 44G, the loss occurrence number 44B, the first test condition 44C and the second test condition 44E from the communication I/F unit 41 or the operation inputting unit 42, and storing into the storing unit 44.

The verification target setting unit 45F has a function of extracting a plurality of scenario data as a verification range from the scenario data group 44G, and moreover, classifying the plurality of scenario data having been extracted into a plurality of verification units.

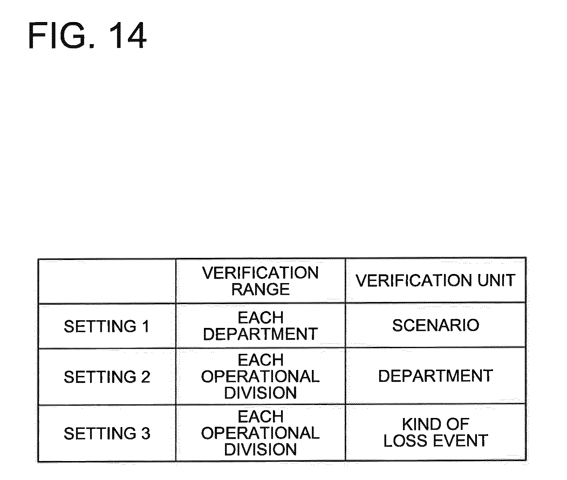

Fig. 14 shows an example of a verification range and a verification unit. In a setting 1, the unit of the verification range is a department, and the verification unit is a scenario. According to this setting 1, for example, focusing on a first sales department, the set of scenario data including the first sales department as a related division in Fig. 13 is the verification range, and each of the scenario data within the set is the verification unit. Moreover, in a setting 2, the unit of the verification range is each operational division, and the verification unit is a department. According to this setting 2, for example, focusing on a first operational division having the first sales department and a second sales department, the set of scenario data including the first sales department or the second sales department as a related division in Fig. 13 is the verification range and, in the set, the set of scenario data including the first sales department as a related division and the set of scenario data including the second sales department as a related division are each the verification unit. Moreover, in a setting 3, the unit of the verification range is each operational division, and the verification unit is the kind of a loss event. According to this setting 3, for example, focusing on the first operational division, the set of scenario data including the first sales department or the second sales department as a related division in Fig. 13 is the verification range and, in the set, the set of scenario data including the same kind of loss event is the verification unit.

In the verification target setting unit 45F, one or more settings like the abovementioned settings 1 to 3 are defined. The verification target setting unit 45 calculates the verification units 44A1 and the verification range 44A that is the set thereof from the scenario data group 44G in accordance with the defined settings, and stores into the storing unit 44. In a case that two or more settings are defined, processing is executed in accordance with the defined order. For example, in a case that a setting ranked first is such that the verification range is each department and the verification unit is a scenario, the verification range 44A and the verification units 44A1 are generated for each existing department such as a sates department, and the verification process and the correction process are executed in order. When the verification process and the correction process on the first-ranked setting are completed, the verification range 44A and the verification units 44A1 are generated in accordance with a setting ranked next. Such a process is repeated on all of the defined settings. As the order of processing, bottom-up approach of preferentially executing from a narrower verification range, for example, in order of the setting 1 and then the setting 2 in Fig. 14 is preferable in order to avoid that a department generating a correct scenario is subjected to correction due to influence by another department generating an incorrect scenario. Moreover, in the case of processing preferentially from a narrower verification range, there is a possibility that, when correction is executed in verification of a verification range in the middle, the result of the correction conflicts with verification of a narrower verification range having been executed before, and hence, it is desirable to re-execute verification from the narrowest verification range when correction is executed in the middle.

The first test processing unit 45B, the second test processing unit 45D, the correcting unit 45E and the outputting unit 45C have the same functions as the first test processing unit 35B, the second test processing unit 35D, the correcting unit 35E and the outputting unit 35C in the third exemplary embodiment. However, the first and second test processing units 45B and 45D store the first and second test results 44D and 44F into the storing unit 44 so that it is definitely distinguished what setting the test result is the result of testing on a verification range in. Moreover, the outputting unit 45C outputs the first and second test results 44D and 44F to the storing unit 44 so that it is definitely distinguished what setting the test result is the result of testing on a verification range in.

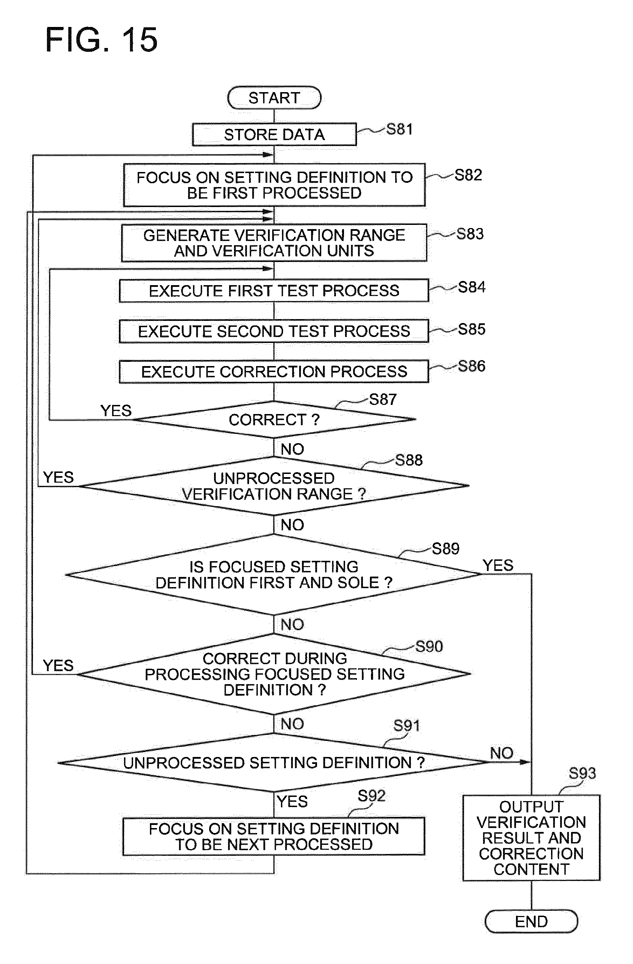

Next, with reference to Fig. 15, the operation of the risk management device 4 according to this exemplary embodiment will be described.

First, the input storing unit 45A inputs therein the scenario data group 44G, the actual loss occurrence number 44B corresponding to scenario data, the first test condition 44C and the second test condition 44E from the communication I/F unit 41 or the operation inputting unit 42, and stores into the storing unit 44 (step S81).

Next, the verification target setting unit 45F focuses on the definition of a first-ranked setting to be processed first (step S82). Next, in accordance with the focused setting definition, the verification target setting unit 45F extracts a plurality of scenario data as a verification range from the scenario data group 44G, and moreover, classifies the plurality of scenario data having been extracted into a plurality of verification units, thereby generating the verification units 44A1 and the verification rage 44A that is a collection thereof and storing into the storing unit 44 (step S83).

Next, the first test processing unit 45B loads the plurality of verification units 44A1 and the verification range 44A that is a collection thereof generated by the verification target setting unit 45F, the loss generation number 44B and the first test condition 44C from the storing unit 44 and, as well as the first test processing unit 35B in the third exemplary embodiment, determines by using a goodness-of-fit test on a Poisson distribution whether the total value of loss occurrence numbers corresponding to scenario data included in the verification range 44A follows a Poisson distribution in which the total value of predicted values of loss occurrence frequency in the scenario data included in the verification range 44A is defined as the mean, and stores the result into the storing unit 44 (step S84),

Next, as well as the second test processing unit 35D in the third exemplary embodiment, the second test processing unit 45D determines by using a goodness-of-fit test on a multinomial distribution whether the loss occurrence numbers 44B corresponding to scenario data for the respective verification units 44A1 follow a multinomial distribution that a total parameter is the total value of the loss occurrence numbers 44B corresponding to the scenario data included in the verification range 44A and a ratio parameter is the ratio of the total value of the predicted values of loss occurrence frequency in the scenario data for each of the verification unit 44A1 to the total value of the predicted values of loss occurrence frequency in the scenario data included in the verification range 44A, and stores the result into the storing unit 44 (step S85).

Next, as well as the correcting unit 35E in the third exemplary embodiment, the correcting unit 45E determines a verification unit 44A1 subjected to correction of a predicted value of loss occurrence frequency based on the conservativeness verification test result 44D and the unbiasedness verification test result 44F, corrects a predicted value of loss occurrence frequency in scenario data in the determined verification unit 44A1, and stores the corrected scenario data into the storing unit 44 (step S86).

Next, the correcting unit 45E determines whether it has corrected at least one scenario data (step S87) and, in the case of having corrected, returns control to the first test processing unit 45B. Consequently, after the verification of conservativeness and verification of unbiasedness as mentioned above are executed on the verification range 44A in process again by using the corrected scenario data, the correction process by the correcting unit 45E is executed. This process is repeated until the correction process is executed on all scenario data to be corrected. On the other hand, in the case of having not corrected scenario data, the correcting unit 45E returns control to the verification target setting unit 45F.

The verification target setting unit 45F determines whether an unprocessed verification range regarding the focused setting definition exists (step S88) and, in a case that an unprocessed verification range exists, returns to the processing at S83. Consequently, in accordance with the focused setting definition, the verification units 44A1 and the verification range 44A that is a collection thereof are generated with respect to the unprocessed setting range, and the verification of conservativeness, the verification of unbiasedness and the correction process are executed on the verification range 44A.

On the other hand, in a case that an unprocessed verification range regarding the focused setting definition is not left, the verification target setting unit 45F determines whether the focused setting definition is the first and sole one (step S89). In a case that the focusing setting definition is the first and sole one, the verification target setting unit 45F passes control to the outputting unit 45C. In a case that the focused setting definition is not the first or sole one, the verification target setting unit 45F determines whether correction on scenario data has been performed in processing of the focused setting definition (step S90). In a case that the correction has been performed, the verification target setting unit 45F returns to the processing at step S82. Consequently, verification is repeated from the first setting definition again. Moreover, when the correction has not been performed, the verification target setting unit 45F determines whether there is an unprocessed setting definition (step S91) and, when there is an unprocessed one, also returns to the processing at step 83. Consequently, with respect to the next setting definition, the same processing as executed for the previous setting definition is repeated. Moreover, when there is no unprocessed setting definition, the verification target setting unit 45F passes the outputting unit 45C.

The outputting unit 45C loads therein the first test result 44D, the second test result 44F and the corrected scenario data from the storing unit 44, and outputs a conservativeness verification result for the whole verification units, an unbiasedness verification result among verification units, and the content of correction for each of the settings to the screen displaying unit 43, or to the outside via the communication I/F unit 41 (step S93).

Thus, according to this exemplary embodiment, it is possible to obtain the same effect as in the third exemplary embodiment, and it is also possible to reduce load on a person in charge of verification because it is possible to automatically generate the verification range 44A and the verification units 44A1.

### [Other Exemplary Embodiments]

Although the present invention has been described above with the exemplary embodiments, the present invention is not limited to the exemplary embodiments described above and can be modified in various manners. For example, the present invention can also be applied to risk other than operational risk, such as credit risk relating to margin trading like load service and market risk relating to exchange trading and interest trading. Moreover, the present invention also includes exemplary embodiments as described below.

In the exemplary embodiments described above, three verification results of "conservative," "valid" and "nonconservative" are derived in verification of conservativeness. However, according to the present invention, two verification results of "valid" and "others" may be derived in verification of conservativeness.

Further, in the exemplary embodiments described above, significance levels in verification of conservativeness and verification of unbiasedness are fixed values. However, according to the present invention, the significance levels may be variable values. Moreover, it is possible to configure to execute verification of conservativeness, verification of unbiasedness and a correction process with a first significance level and thereafter execute verification of conservativeness and verification of unbiasedness with a second significance level which is larger than the first significance level, and output only the results of verification with the second significance level.

Further, in the exemplary embodiments described above, verification results of verification of conservativeness and verification of unbiasedness are classified into six cases, and correction is performed automatically in five cases other than a case of valid in conservativeness/unbiasedness. However, according to the present invention, correction may be performed automatically in, among the five cases, only one case of nonconservative/unbiased, or only two cases of nonconservative/unbiased and nonconservative/biased, or only three cases of nonconservative/unbiased, nonconservative/biased and valid in conservativeness/biased.

The present invention is based upon and claims the benefit of priority from Japanese patent application No. 2011-072747, filed on March 29, 2011, the disclosure of which is incorporated herein in its entirety by reference.

The present invention can be utilized to, for example, verify the validity of a predicted value of loss occurrence frequency in scenario data used as input information to a risk weighing device and correct the predicted value depending on the verification result.

The whole or part of the exemplary embodiments disclosed above can be described as, but not limited to, the following supplementary notes.

### (Supplementary Note 1)

A risk management device comprising:
a storing means for storing a plurality of verification units each composed of one or more scenario data each including a predicted value of loss occurrence frequency, a verification range that is a collection of the plurality of verification units, and actual loss occurrence numbers corresponding to the scenario data; and
a first test processing means for determining by using a goodness-of-fit test on a Poisson distribution whether a total value of the loss occurrence numbers corresponding to the scenario data included in the verification range follows a Poisson distribution that a total value of predicted values of loss occurrence frequency in the scenario data included in the verification range is defined as a mean.

### (Supplementary Note 2)

The risk management device according to Supplementary Note 1, comprising a second test processing means for determining by using a goodness-of-fit test on a multinomial distribution whether the loss occurrence numbers corresponding to the scenario data for the respective verification units follow a multinomial distribution that a total parameter is the total value of the loss occurrence numbers corresponding to the scenario data included in the verification range and a ratio parameter is a ratio of a total value of the predicted values of loss occurrence frequency in the scenario data for each of the verification units to the total value of the predicted values of loss occurrence frequency in the scenario data included in the verification range.

### (Supplementary Note 3)

The risk management device according to Supplementary Note 2, comprising a correcting means for determining a verification unit in which a predicted value of loss occurrence frequency in scenario data is to be corrected, based on a result of the goodness-of-fit test on the Poisson distribution and a result of the goodness-of-fit test on the multinomial distribution.

### (Supplementary Note 4)

The risk management device according to Supplementary Note 3, wherein the correcting means is configured to correct the predicted value of loss occurrence frequency in the scenario data included in the determined verification unit.

### (Supplementary Note 5)

The risk management device according to any of Supplementary Notes 1 to 4, wherein the storing means is configured to store a scenario data group composed of a plurality of scenario data each including a predicted value of loss occurrence frequency,
the risk management device comprising a verification target setting means for extracting the verification range and the plurality of verification units from the scenario data group.

### (Supplementary Note 6)

A risk management method executed by a risk management device which includes a storing means for storing a plurality of verification units each composed of one or more scenario data each including a predicted value of loss occurrence frequency, a verification range that is a collection of the plurality of verification units, and actual loss occurrence numbers corresponding to the scenario data, and includes a first test processing means,
the risk management method comprising:
by the first test processing means, determining by using a goodness-of-fit test on a Poisson distribution whether a total value of the loss occurrence numbers corresponding to the scenario data included in the verification range follows a Poisson distribution that a total value of predicted values of loss occurrence frequency in the scenario data included in the verification range is defined as a mean.

### (Supplementary Note 7)

The risk management method according to Supplementary Note 6, wherein the risk management device includes a second test processing means,
the risk management method comprising:
by the second test processing means, determining by using a goodness-of-fit test on a multinomial distribution whether the loss occurrence numbers corresponding to the scenario data for the respective verification units follow a multinomial distribution that a total parameter is the total value of the loss occurrence numbers corresponding to the scenario data included in the verification range and a ratio parameter is a ratio of a total value of the predicted values of loss occurrence frequency in the scenario data for each of the verification units to the total value of the predicted values of loss occurrence frequency in the scenario data included in the verification range.

### (Supplementary Note 8)

The risk management method according to Supplementary Note 7, wherein the risk management device includes a correcting means,
the risk management method comprising:
by the correcting means, determining a verification unit in which a predicted value of loss occurrence frequency in scenario data is to be corrected, based on a result of the goodness-of-fit test on the Poisson distribution and a result of the goodness-of-fit test on the multinomial distribution.

### (Supplementary Note 9)

The risk management method according to Supplementary Note 8, comprising:
by the correcting means, correcting the predicted value of loss occurrence frequency in the scenario data included in the determined verification unit.

### (Supplementary Note 10)

A computer program comprising instructions for causing a computer, which has a storing means for storing a plurality of verification units each composed of one or more scenario data each including a predicted value of loss occurrence frequency, a verification range that is a collection of the plurality of verification units, and actual loss occurrence numbers corresponding to the scenario data, to functions as:
a first test processing means for determining by using a goodness-of-fit test on a Poisson distribution whether a total value of the loss occurrence numbers corresponding to the scenario data included in the verification range follows a Poisson distribution that a total value of predicted values of loss occurrence frequency in the scenario data included in the verification range is defined as a mean.

### DESCRIPTION OF REFERENCE NUMERALS

- 1, 2, 3, 4: risk management device
- 11, 21, 31, 41: communication I/F unit
- 12, 22, 32, 42: operation inputting unit
- 13, 23, 33, 43: screen displaying unit
- 14, 24, 34, 44: storing unit
- 15, 25, 35, 45: processor

## Claims

1. A risk management device comprising:
a memory for storing a plurality of verification units each composed of one or more scenario data each including a predicted value of loss occurrence frequency, a verification range that is a collection of the plurality of verification units, and actual loss occurrence numbers corresponding to the scenario data; and
a processor connected to the memory,
wherein the processor is programmed to determine by using a goodness-of fit test on a Poisson distribution whether a total value of the loss occurrence numbers corresponding to the scenario data included in the verification range follows a Poisson distribution that a total value of predicted values of loss occurrence frequency in the scenario data included in the verification range is defined as a mean.

2. The risk management device according to Claim 1, wherein the processor is further programmed to determine by using a goodness-of-fit test on a multinomial distribution whether the loss occurrence numbers corresponding to the scenario data for the respective verification units follow a multinomial distribution that a total parameter is the total value of the loss occurrence numbers corresponding to the scenario data included in the verification range and a ratio parameter is a ratio of a total value of the predicted values of loss occurrence frequency in the scenario data for each of the verification units to the total value of the predicted values of loss occurrence frequency in the scenario data included in the verification range.

3. The risk management device according to Claim 2, wherein the processor is further programmed to determine a verification unit in which a predicted value of loss occurrence frequency in scenario data is to be corrected, based on a result of the goodness-of-fit test on the Poisson distribution and a result of the goodness-of-fit test on the multinomial distribution.

4. The risk management device according to Claim 3, wherein the processor is further programmed to correct the predicted value of loss occurrence frequency in the scenario data included in the determined verification unit.

5. The risk management device according to any of Claims 1 to 4, wherein:
the memory is further configured to store a scenario data group composed of a plurality of scenario data each including a predicted value of loss occurrence frequency; and
the processor is further programmed to extract the verification range and the plurality of verification units from the scenario data group.

6. A risk management method executed by a risk management device which includes a memory for storing a plurality of verification units each composed of one or more scenario data each including a predicted value of loss occurrence frequency, a verification range that is a collection of the plurality of verification units, and actual loss occurrence numbers corresponding to the scenario data, and includes a processor connected to the emory,
the risk management method comprising:
by the processor, determining by using a goodness-of-fit test on a Poisson distribution whether a total value of the loss occurrence numbers corresponding to the scenario data included in the verification range follows a Poisson distribution that a total value of predicted values of loss occurrence frequency in the scenario data included in the verification range is defined as a mean.

7. The risk management method according to Claim 6, further comprising:
by the processor, determining by using a goodness-of-fit test on a multinomial distribution whether the loss occurrence numbers corresponding to the scenario data for the respective verification units follow a multinomial distribution that a total parameter is the total value of the loss occurrence numbers corresponding to the scenario data included in the verification range and a ratio parameter is a ratio of a total value of the predicted values of loss occurrence frequency in the scenario data for each of the verification units to the total value of the predicted values of loss occurrence frequency in the scenario data included in the verification range.

8. The risk management method according to Claim 7, further comprising:
by the processor, determining a verification unit in which a predicted value of loss occurrence frequency in scenario data is to be corrected, based on a result of the goodness-of-fit test on the Poisson distribution and a result of the goodness-of-fit test on the ultinomial distribution.

9. The risk management method according to Claim 8, further comprising:
by the processor, correcting the predicted value of loss occurrence frequency in the scenario data included in the determined verification unit.

10. A computer program comprising instructions for causing a processor, which is connected to a memory for storing a plurality of verification units each composed of one or more scenario data each including a predicted value of loss occurrence frequency, a verification range that is a collection of the plurality of verification units, and actual loss occurrence numbers corresponding to the scenario data, to perform operations including:
determining by using a goodness-of-fit test on a Poisson distribution whether a total value of the loss occurrence numbers corresponding to the scenario data included in the verification range follows a Poisson distribution that a total value of predicted values of loss occurrence frequency in the scenario data included in the verification range is defined as a mean.
